# EUROPEAN PATENT SPECIFICATION

(11) **EP 1 434 387 B1**
(45) Date of publication and mention of the grant of the patent: **01.03.2006**
(21) Application number: 03257783.5
(22) Date of filing: 10.12.2003
(51) Int. Cl.: H04L 12/26

(54) **Device monitoring system, monitoring program, and monitoring method and device**
Geräteüberwachungssystem, Überwachungsprogramm, und Überwachungsverfahren und -gerät
Système de surveillance des dispositifs, programme de surveillance, et méthode et dispositif de surveillance

(30) Priority: 27.12.2002 JP 2002379954; 12.11.2003 JP 2003382653
(43) Date of publication of application: 30.06.2004
(60) Divisional application: 05077782.0
(73) Proprietor: SEIKO EPSON CORPORATION, Shinjuku-ku, Tokyo 163-0811 (JP)
(72) Inventor: Takahashi, Toru, Suwa-shi Nagano-ken 392-8502 (JP); Mokuya, Senichi, Suwa-shi Nagano-ken 392-8502 (JP)
(74) Representative: Sturt, Clifford Mark

(56) References cited:
- US-A- 5 790 797
- US-A1- 2002 116 490
- US-A1- 2002 177 448

## Description

### BACKGROUND OF THE INVENTION

### Field of the Invention

The present invention relates to a device monitoring system, monitoring program, and monitoring method and device for managing a plurality of devices on a network using at least one device management server.

### Description of the Related Art

Generally, in a network system which manages a plurality of devices on a network using one or more device management servers, the device management server (s) interrogate (s) each device periodically or as required, check (s) for a response from the device, and thereby monitor (s) state of each device including its operation status

### (Patent Document 1)

Japanese Patent Laid-Open No. 2001-67334

### (Patent Document 2)

Japanese Patent Laid-Open No. 2002-57680

However, such an inquiry-response type monitoring scheme has the following problems.

Namely, with the inquiry-response type monitoring scheme, in which inquiries and responses are repeated on a device-by-device basis, when the network grows in scale, increasing the number of devices, the load on the device management server as well as network traffic increase proportionally. This makes it necessary to prepare high-spec servers and broadband network backbones, which may cause sizeable increases in costs.

Also, since there is no way to know the state of each device unless the device management server makes inquiries, if inquiry intervals are extended to reduce the traffic, etc., abnormality detection will take time, making it impossible to respond quickly.

The present invention has been made to solve the above problems effectively. Its main object is to provide a device monitoring system, device monitoring program, and device monitoring method which can monitor devices reliably without increasing the load on device management servers or increasing network traffic.

US Patent Publication No. 2002 177448 discloses a system and method for wireless data performance monitoring of wireless service providers. The system comprises a plurality of monitoring probes that are situated at remote locations throughout a service region being evaluated. The monitoring probes send and receive wireless data and track performance criteria such as delivery latencies and network accessibility. The various performance data gathered by the monitoring probes are then sent to one or more central monitoring stations which may also send and receive wireless data and gather performance data. The various performance data is stored in one or more central data bases.

US Patent No. 5790797 discloses a load distribution system for a monitoring device. The system comprises three monitoring devices which monitor respective sub-networks. Each sub-network comprises a plurality of transmission devices. Information about the operating conditions of the transmission devices in each sub-network is periodically transmitted to the monitoring devices that monitor the other sub-networks. Therefore, each monitoring device is capable of recognising the operating conditions of transmission devices in the network as a whole and not just the operating conditions of transmission devices in its respective sub-network. The operating conditions of each monitoring device are also transmitted to the other monitoring devices in the system.

### SUMMARY OF THE INVENTION

### (Invention 1)

Invention 1 is a printer monitoring system comprising a plurality of printers connected to a network and a printer management server which manages the plurality of printers, wherein: each of the plurality of printers is provided with a printer monitoring function for monitoring another printer distinct from the monitoring printer and notifying the printer management server or a third printer distinct from said another printer of changes in the state of the monitored printer, and wherein the printer monitoring function comprises: printer detecting section for recognizing existence of other printers connected to the network; printer management table creation section for creating a printer management table for use to identify a printer to be monitored out of the recognized other printers; printer management table storage section for storing the created printer management table; status information detecting section for detecting status information about the monitoring printer; status information transmission section for transmitting status information about the monitoring printer and the monitored printer to a third printer or the printer management server; and status information receiving section for receiving status information at least from any other printer.

This makes it possible to avoid increases in the load on a device management server, etc. and in network traffic, which would be caused by interrogations, and notify other devices of any change in the state of the monitored device reliably.

Furthermore, since this invention comprises the device management server in addition to the devices to be monitored, by notifying the device management server of changes in the state of the monitored devices, it is possible to reduce the loads on individual devices when sending and receiving the notification of state changes.

This also makes is possible to monitor all the devices on the network efficiently and allows each device to acquire and transmit detected status information reliably.

### (Invention 2)

Invention 2 is a printer monitoring program used for the printer monitoring system according to invention 1, wherein the printer monitoring program makes a computer implement the printer monitoring function of the printer monitoring system according to invention 1.

This makes it possible to implement the device monitoring function more easily and economically as software using a general-purpose computer or part of built-in computer functions of devices than when implementing the same function using hardware.

### Invention 3)

Invention 3 is a printer monitoring method for a plurality of printers in a network, wherein the plurality of printers monitor each other for their state periodically or on an as-needed basis and any printer which finds any change in the state being monitored notifies other printers or a printer management server about the change.

This makes it possible to avoid increases in the load on a device management server, etc. and in network traffic, which would be caused by interrogations, and notify other devices of any change in the state of the monitored device reliably.

### (Invention 4)

Invention 4 is the printer monitoring method according to invention 3, wherein: the notification includes log information about the monitored printer.

This makes it possible not only to identify the device which has developed the abnormality or the like, but also to check operation history including the time at which the abnormality or the like occurred.

### (Invention 5)

Invention 5 is the printer monitoring method according to invention 3 or 4, wherein: each of the printers monitors a logically or physically close printer.

Specifically, logically close devices are those devices which are similar in functionality or which belong to the same category. Examples are a printer and printer, a printer and scanner, etc. Physically close devices are those devices which are literally installed at a close range, such as a microwave oven and refrigerator installed in the same kitchen (the same applies hereinafter).

Thus, if logically or physically close devices are selected to monitor each other, since both devices are often on and operating simultaneously, if a failure occurs in either of them, it can be recognized immediately.

### (Invention 6)

Invention 6 is the printer monitoring method according to any of inventions 3 to 5, wherein: each of the printers monitors a functionally similar printer.

Since functionally similar devices are often operating simultaneously as in the case of logically or physically close devices, if a failure occurs in either of them, it can be recognized immediately.

### (Invention 7)

Invention 7 is the printer monitoring method according to any of inventions 3 to 6, wherein: each of the printers monitors printers which differ by a certain period or more in the time of manufacture.

If devices manufactured in the same period are selected to monitor each other and if old devices are paired together, in the worst case, both devices may go down simultaneously and their failure may not be notified to the device management server at all.

Thus, as in the case of this invention, by pairing devices which differ by a certain period or more in the time of manufacture, i.e., by pairing old and new devices in terms of manufacturing date, as monitoring partners, it is possible to almost eliminate the chance that both devices will go down simultaneously and to notify any failure in either of them to the device management server reliably.

### (Invention 8)

Invention 8 is the printer monitoring method according to any of inventions 3 to 7, wherein: each of the printers determines a printer to be monitored according to a printer management table created by a parent printer.

This makes is possible to smoothly determine a device to be monitored by each device, avoid leaving any device unmonitored, and thus implement an efficient and highly reliable device monitoring system.

### (Invention 9)

Invention 9 is the printer monitoring method according to invention 8, wherein: the printer management table is created by the parent printer according to printer management method properties acquired from the printer management server.

This allows each device to create a device management table easily without learning the number, types, etc. of devices on the same network each time.

### (Invention 10)

Invention 10 is the printer monitoring method according to inventions 8 or 9, wherein: the printer which starts up first from among the plurality of printers in the network becomes the parent printer.

In this way, by making the device that starts up first become the parent device flexibly instead of determining a fixed parent device, it is possible to determine the parent device quickly, and thereby operate the system smoothly.

### (Invention 11)

Invention 11 is the printer monitoring method according to any of inventions 8 to 10, wherein: when the parent printer stops operating, a printer which detects the shut down functions as a parent printer instead.

Consequently, even if the parent device stops operating or goes down, another device functions quickly as a parent device, allowing the system to continue operating smoothly as in the case of invention 8.

### (invention 12)

invention 12 is the printer monitoring method according to any of inventions 8 to 11, wherein: when the parent printer shuts down, the first printer that receives a shut-down notice from the parent printer functions as a parent printer instead.

Consequently, as in the case of invention 11, even if the parent device stops operating, another device functions quickly as a parent device, allowing the system to continue operating smoothly.

### (Invention 13)

Invention 13 is the printer monitoring method according to any of inventions 8 to 12, wherein: an XML protocol is used as a data description format for communications section among the printers and communications section between the printers and the printer management server.

The use of such a standard protocol used on the internet makes it possible to exchange data easily and reliably not only between devices of the same type, but also between devices of different types or between devices of different vendors.

### BRIEF DESCRIPTION OF THE DRAWINGS

FIG. 1 is a diagram showing a configuration of a network related to a device monitoring system;
FIG. 2 is a diagram showing a configuration of a device monitoring function of a device;
FIG. 3 is a diagram showing a configuration of a status information processing function of a device management server;
FIG. 4 is a diagram showing a minimum configuration of the device monitoring system;
FIGS. 5A and 5B are diagrams showing a device monitoring table and a direction of status notification;
FIG. 6 is a block diagram showing a hardware configuration which implements the system of the present invention;
FIG. 7 is a diagram showing an example of device management properties;
FIG. 8 is a flowchart showing acquisition of a device management method;
FIG. 9 is a flowchart showing a method for determining a parent device;
FIG. 10 is a flowchart showing another method for determining a parent device;
FIG. 11 is a flowchart showing acquisition of a device management method from a server;
FIG. 12 is a flowchart showing how to create a device management table;
FIG. 13 is a flowchart showing how status information is detected and stored;
FIG. 14 is a flowchart showing how status information is transmitted;
FIG. 15 is a flowchart showing how status is inquired about;
FIG. 16 is a flowchart showing how a device shut-down notice is provided;
FIG. 17 is a diagram showing flows of packets between server and devices under normal conditions according to a conventional scheme;
FIG. 18 is a diagram showing flows of packets between server and devices under abnormal conditions according to the conventional scheme;
FIG. 19 is a diagram showing flows of packets between server and devices in normal state according to the present invention;
FIG. 20 is a diagram showing flows of packets between server and devices under abnormal conditions according to the present invention;
FIG. 21 is a diagram showing an example of cross-holding of log information among devices;
FIG. 22 is a diagram showing flows of information which take place when a device shuts down;
FIG. 23 is a diagram showing another example of a network configuration to which the present invention can be applied;
FIG. 24 is a diagram showing another example of a network configuration to which the present invention can be applied;
FIG. 25 is a diagram showing another example of a network configuration to which the present invention can be applied;
FIG. 26 is a diagram showing another example of a network configuration to which the present invention can be applied;
FIG. 27 is a diagram showing another example of a network configuration to which the present invention can be applied;
FIG. 28 is a diagram showing another example of a network configuration to which the present invention can be applied;
FIG. 29 is a diagram showing another example of a network configuration to which the present invention can be applied;
FIGS. 30A and 30B are diagrams showing a device monitoring table and a direction of status notification;
FIGS.31A and 31B are diagrams showing a device monitoring table and a direction of status notification;
FIG. 32 is a diagram showing an example of manufacturing dates of devices;
FIG. 33 is a diagram showing an example of a device management table;
FIG. 34 is a diagram showing an example of a device management table;
FIG. 35 is a diagram showing an example of information about manufacturing dates, etc. of devices;
FIG. 36 is a diagram showing an example of how devices are paired for monitoring based on the time of manufacture, etc.;
FIG. 37 is a diagram showing an example of information about device life, etc.;
FIG. 38 is a diagram showing an example of information about manufacturing dates, etc. of devices;
FIG. 39 is a diagram showing an example of how devices are paired for monitoring based on the time of manufacture, etc.;
FIG. 40 is a diagram showing an example of information about manufacturing dates, etc. of devices;
FIG. 41 is a diagram showing an example of how devices are paired for monitoring based on the time of manufacture, etc.;
FIG. 42 is a flowchart showing how operation history is transferred; and
FIG. 43 is a flowchart showing processes involved in addition of a new device.

### DETAILED DESCRIPTION OF THE PREFERRED EMBODIMENTS

Preferred embodiments of the present invention will be described in detail below with reference to the drawings.

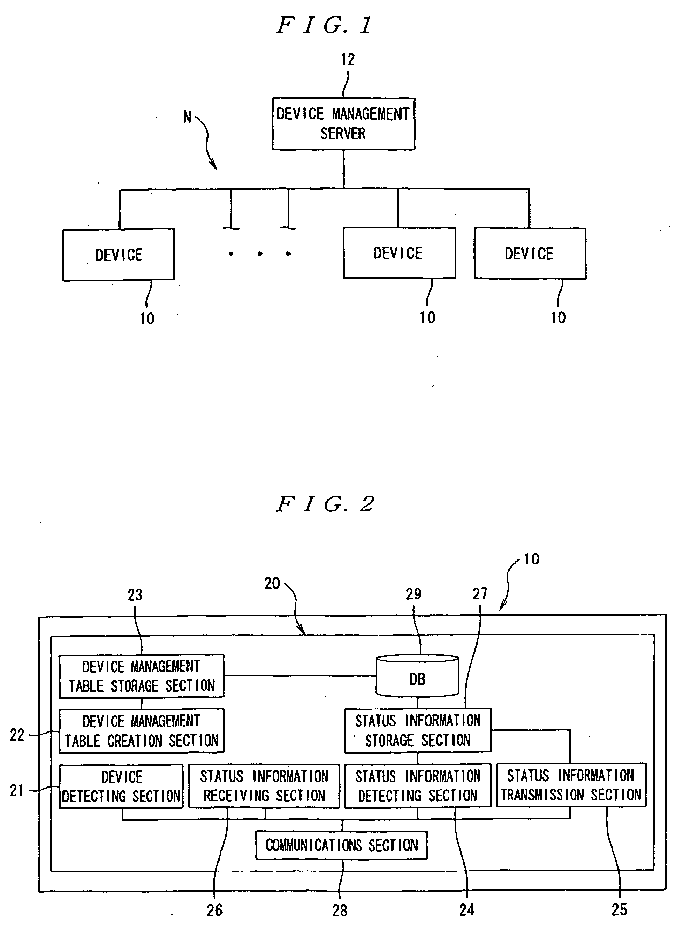

FIG. 1 shows a minimum configuration of a network related to a device monitoring system of the present invention. The system comprises at least two or more devices 10 connected to the network N, and at least one or more device management servers 12.

The devices 10 according to the present invention are not specifically limited as long as they can be connected a network and can communicate with the device management servers 12 via the network N. They include network-connectable devices in general: for example, printers, scanners, copying machines, facsimile machines, projectors, digital cameras, PCs, audio devices, television sets, video cassette recorders, refrigerators, microwave ovens, humidifiers, air conditioners, washingmachines, fans, other digital household appliances, portable telephones, PDAs (Personal Digital (Data) Assistants), portable terminals for electronic paper and the like, network cards, gateways (including home gateways), routers, bridges, and HUBs.

The "network-connectable" devices are devices 10 equipped with a network-connectable communications interface such as those listed below.

Namely, such an interface may be an Ethernet interface compliant with 10BASE-2, 10BASE-5, 10BASE-10, or the like; Fast Ethernet interface compliant with 100BASE-FX, 100BASE-TX, or the like; Gigabit Ethernet interface compliant with 1000BASE-SX, 1000BASE-LX, or the like; 10 Gigabit Ethernet interface; FDDI (Fiber-Distributed Data Interface) interface; Token Ring interface; wireless LAN interface compliant with IEEE1394, IEEE802.11a, IEEE802.11b, or the like; USB (Universal Serial Bus) interface compliant with. USB1.1, USB2.0 (HI-SPEED USB), or the like; Bluetooth interface; or Infrared communications interface compliant with IrDA (Infrared Data Association) or the like.

The devices 10 are equipped with a device monitoring function 20 configured as shown in FIG. 2 in addition to functions peculiar to individual devices.

The device monitoring function 20 monitors another device 10 periodically or on an as-needed basis, acquires its status information, and notifies the device management servers 12 via the network N as required. It mainly consists of device detecting section 21, device management table creation section 22, device management table storage section 23, status information detecting section 24, status information transmission section 25, status information receiving section 26, status information storage section 27, communications section 28, and a database 29, as shown in FIG. 2.

The device detecting section 21 allows the devices on the network N to recognize each other's existence, and existence of any newly added device as well.

The device management table creation section 22 creates a table for use to pair devices 10 on the network N in order for them to monitor each other. Any device management table created is stored in the database 29 by the device management table storage section 23.

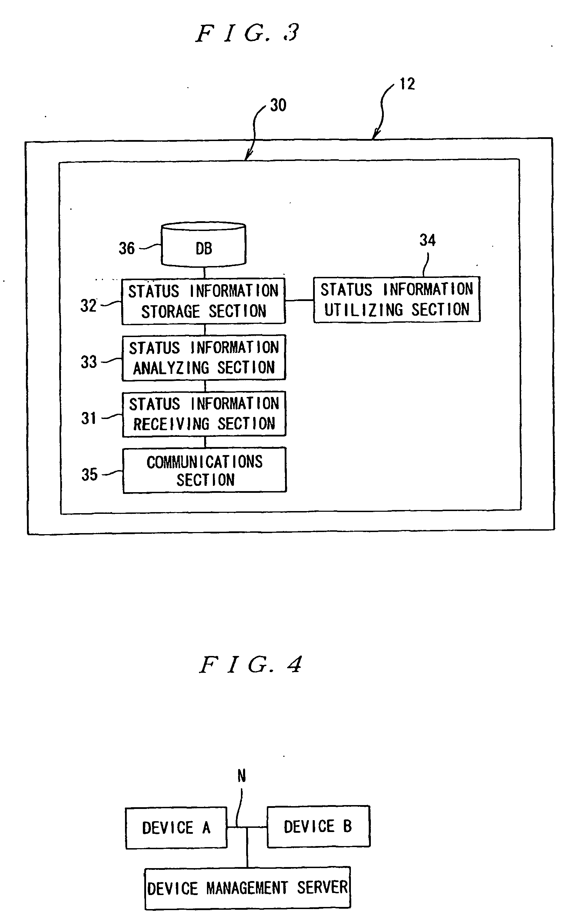

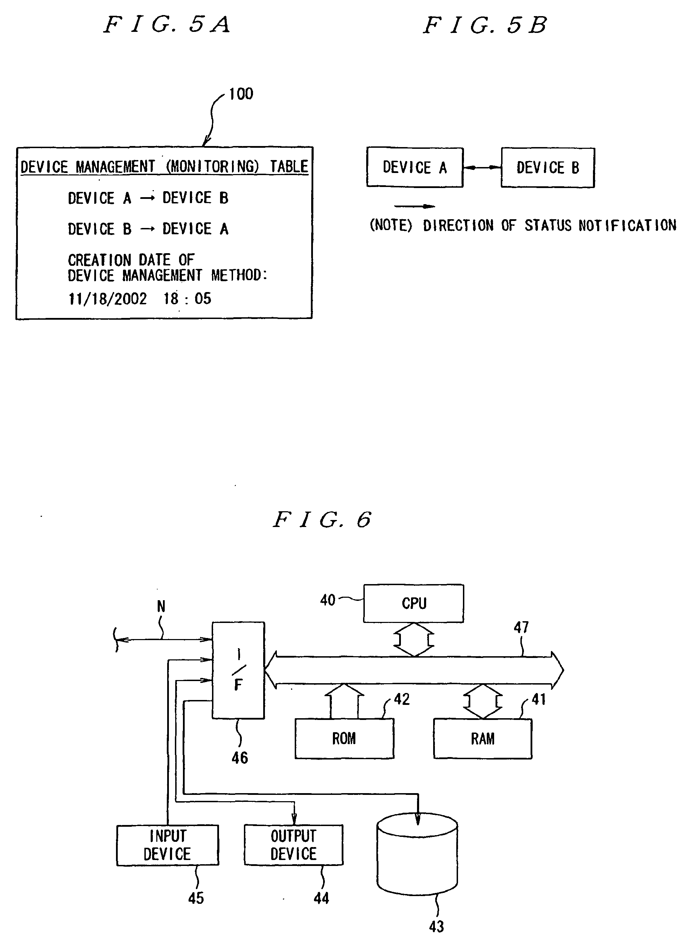

For example, in a network N with a minimum configuration shown in FIG. 4 such that two devices A and B are managed based on one device management table, the device management table 100 stipulates that one device A and the other device B manage (monitor) each other as shown in FIG. 5A. Also, their status information is supposed to be transmitted to each other and shared by the two devices as shown in FIG. 5B.

The status information detecting section 24 periodically acquires local status information including, for example, error, failure, and idle states from sensors installed in various parts of the device.

The status information transmission section 25 transmits the local status information acquired by the status information detecting section 24 to another device specified by the device management table and transmits status information about the other device as well as the local status information to the device management server or a third device.

The status information receiving section 26 receives status information from another device. Then, the received status information is stored by the status information storage section 27 in the database 29 together with the local status information acquired by the status information detecting section 24.

The communications section 28 provides capabilities to communicate with the device management server 12 and other devices. Also, it provides an interface with the network N and mainly serves to send and receive status information.

On the other hand, the device management server 12 centrally controls the devices 10 via the network N. Besides, it has a status information processing function 30 which is configured as shown in FIG. 3.

As shown in the figure, the status information processing function 30 is incorporated in the device management server 12 and mainly consists of status information receiving section 31, status information storage section 32, status information analyzing section 33, status information utilizing section 34, communications section 35, and a database 36.

The status information receiving section 31 receives status information from the devices 10. In the example of FIG. 4, when status information is transmitted from device A, status information about device B is received at the same time. Similarly, when status information is transmitted from device B, status information about device A is received at the same time.

The status information storage section 32 stores the status information in the database 36, the status information analyzing section 33 analyzes the status information, and the status information utilization section 34 uses the analysis results of the status information.

The communications section 35 provides capabilities to communicate with the devices 10. Also, it provides an interface with the network N and receives status information from the devices 10.

Incidentally, the device management server 12 is not limited to any particular one and may be any device capable of receiving status information, such as a status management server, PC, workstation, PDA, or portable telephone. It need not be independent of all the devices and it may be combined with or incorporated in any of the devices. Besides, its configuration is not limited to that of this embodiment.

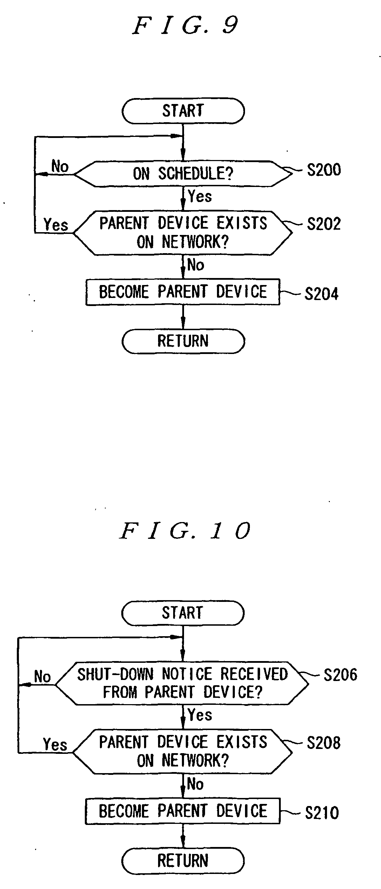

Also, various processing functions including the device monitoring function 20 of the devices 10 and status information processing function 30 of the device management server 12 are implemented by a computer system consisting of hardware which in turn consists of a central processing unit, main storage, etc. and various special-purpose software (processing programs) shown in FIGS. 8 to 16.

As shown in FIG. 6, the computer system which implements the device monitoring function 20 and status information processing function 30 consists of a CPU (Central Processing Unit) 40 which performs various control and computations, a RAM (Random Access Memory) 41 used as a main storage, a ROM (Read Only Memory) 42, a secondary storage 43 such as a hard disk drive (HDD) or semiconductor memory, an output device 44 such as a monitor (LCD (Liquid Crystal Display) or CRT (Cathode Ray Tube)), input devices 45 such as a keyboard and mouse, network N, their input/output interfaces (I/F) 46, all of which are interconnected via various internal and external buses 47 including processor buses such as a PCI (Peripheral Component Interconnect) bus and ISA (Industrial Standard Architecture) bus, a memory bus, a system bus, and an input/output bus.

Various special-purpose control programs, data, etc. supplied on storage media such as CD-ROM, DVD-ROM, and floppy disks (registered trademark) or via the communications network N are installed in the secondary storage 43 and loaded on the main storage 41 as required. Then, according to the programs loadedon the main storage 41, the CPU 40 performs predetermined control and computations using various resources, outputs the results (processed data) to the output device 44 via the bus 47 to display it, and saves (updates) and stores the data in a database in the secondary storage 43 as required.

Available storage media for the various control programs are computer-readable types, including magnetic storage media such as MD (Mini-Disk), optical storage media such as LD (Laser Disc), and magneto-optical storage media such as MO, in addition to the CD-ROM, DVD-ROM, and floppy disk (registered trademark) described above.

Next, description will be given of operation of the device monitoring system of the present invention with the above configuration.

To begin with, as shown in FIG. 8, when a device on the network N is started, it detects another device on the same network N and asks the second device whether it knows a device management method (Step S100).

If it is found (Step S102) that the second device does not know the latest device management method (No), the first device acquires the latest devicemanagement method properties from the device management server (Step S104). If the second device possesses the latest device management method properties (Yes), the first device reflects them as they are in creation of a device management table (Step S106) .

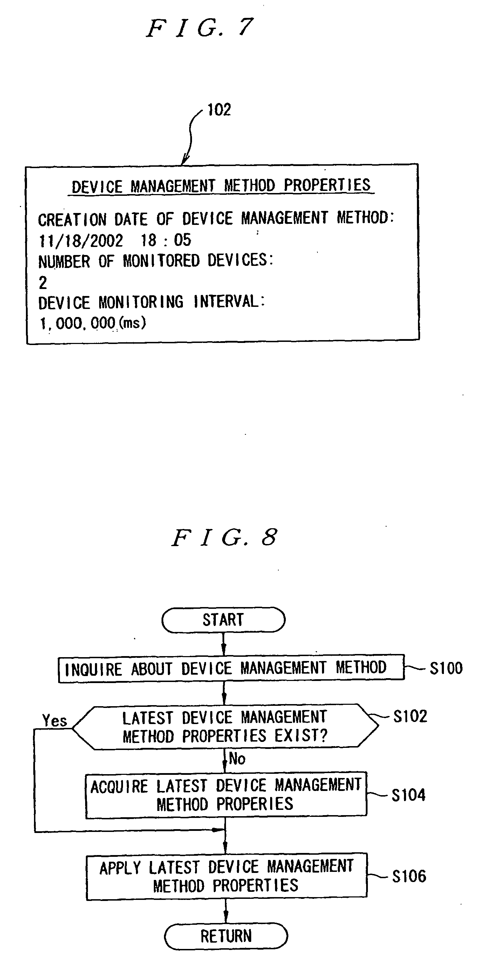

The device management method properties include, for example, the number of monitored devices, device monitoring interval, etc. as is the case with device management method properties 102 shown in FIG. 7.

If a parent device selected in advance from among the devices on the network N acquires the device management method properties, creates a device management table, and distributes it to the other devices, it is no longer necessary for each device to acquire the device management method properties and create a device management table, and thus network traffic can be reduced greatly.

Regarding the method for determining the parent device, it is most efficient, as a rule, to appoint the device which starts up first on the network N as the parent device. In that case, the other devices are supposed to check for the existence of a parent device periodically and a device which does not detect a parent device or receives a shut-down notice from a parent device becomes a parent device instead.

Thus, each non-parent device checks for the existence of a parent device at start-up as well as periodically during operation as shown in FIG. 9 (Steps S200 and S202) and becomes a parent device (Step S204) if no parent device is detected (No). However, it continues to function as an ordinary device if a parent device is detected (Yes) and repeats checking for the existence of a parent device at predetermined time intervals.

Regarding the method for determining "the device which starts up first," it is not limited to a particular one, but the following methods are conceivable, for example.

Specifically, according to one conceivable method, when a device starts up on the network, the other devices on the network are informed of the start-up via broadcasting. According to another method, when ACK (ACKnowledgement) is returned from another device indicating that it has already started up, the local device compares the start-up times between itself and the other device based on the ACK information and thereby determines which started up earlier. If it is found that the two devices started up at the same time, the device which started up earlier is determined, for example, by using a random function r (the function takes a value between 0 and 1 randomly). In that case, the following definition is used, for example: if 0 ≤ r < 0.5, the local device started earlier, but if 0.5 ≤ r < 1, the other device started earlier. Alternatively, when the two devices started at the same time, the first device which inquired about the start-up time may be determined to be the device which started up earlier. Incidentally, to synchronize time in the above method, after the device management server gets the correct time using a GPS (Global Positioning System) or the like, all the devices can synchronize time by making inquiries individually to the device management server periodically based on the NTP (Network Time Protocol) which is a protocol for properly adjusting internal clocks of computers via a network.

On the other hand, as shown in FIG. 10, each non-parent device (hereinafter referred to as a child device) constantly monitors whether a shut-down notice is received from the parent device (Step S206). If a notice is received (Yes), it checks whether any other device has already become a parent device (Step S208). If there is no parent device (No), the non-parent device becomes a parent device (Step S210). If there is a parent device (Yes) or if no shut-down notice is received in Step S206 (No), the non-parent device continues to function as a non-parent device until a shut-down notice is received.

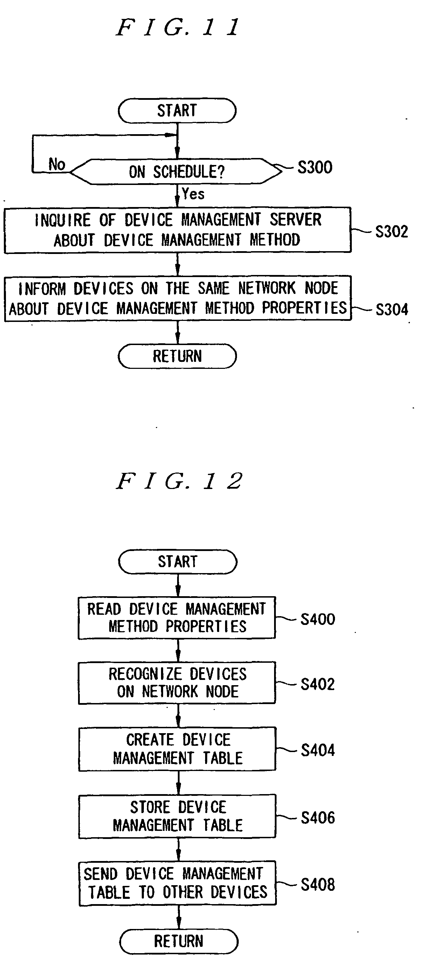

Also as shown in FIG. 11, the parent device periodically inquires of the device management server about the latest device management method (Steps S300, S302) and informs all the devices on the network N about the latest device management method properties (Step S304). Alternatively, the device management server may inform the parent device of the device management method periodically.

When stopping and losing its function, the parent device normally notifies a child device that it is stopping and makes the child device newly become a parent device. On the other hand, if the parent device stops abruptly without going through a shut-down process, no child device knows the shut-down of the parent device. Thus, it is desirable that the parent device sends a "parent-device notice" to the child devices periodically during operation to let them know that it is the sole parent device on the network. The child devices receive the "parent-device notice" periodically and thereby verify that there is a parent device on the network. If no "parent-device notice" comes in for a certain period of time, the child device which recognizes this fact follows some established procedures: for example, it issues a "notice of claim to a parent device" to declare to the other child devices that it will become a new parent device.

Next, the parent device creates a device management table using the device management method properties.

Specifically, as shown in FIG. 12, the parent device reads the latest device management method properties from the device management server (Step S400), recognizes the devices on the network N using the latest device management method properties (Step S402), and then creates the "device management table" (Step S404).

Then, the parent device stores the "device management table" using its own device management table storage section 23 (Step S406) and sends the "device management table" to all the other devices on the network N (Step S408).

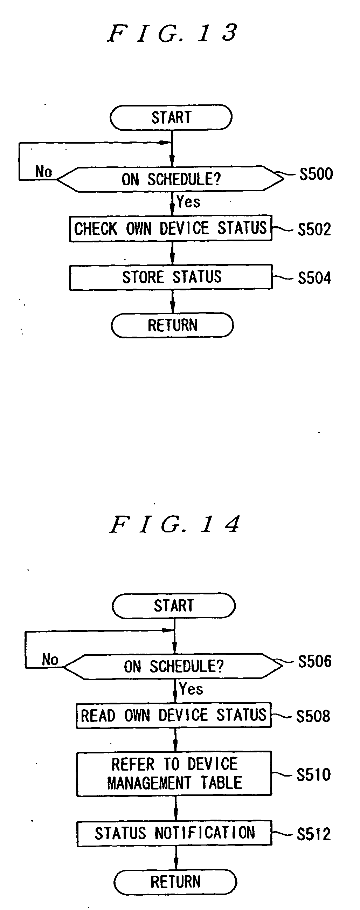

Then, as shown in FIG. 13, each device checks its own device status using its own status information detecting section 24 (Steps S500 and S502) and stores the device status information in its own database 29 via the status information storage section 27 (Step S504).

In addition, as shown in FIG. 14, each device reads its own device status information periodically (Steps S506 and S508) and transmits it to the other devices via the status information transmission section 25 (Steps S510 and S512) according to the device management table.

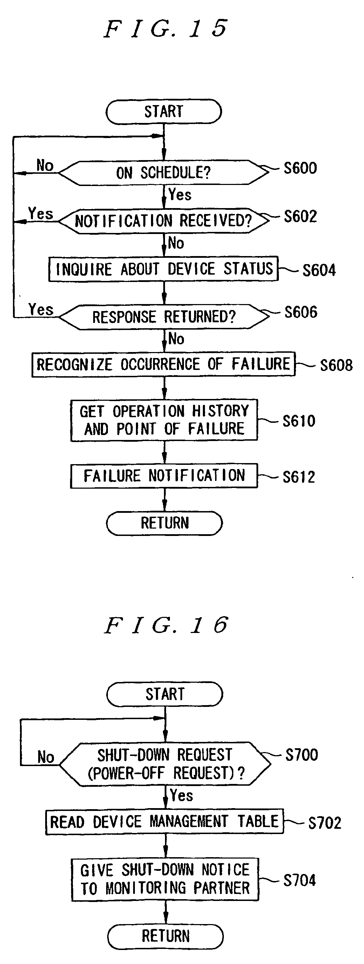

On the other hand, as shown in FIG. 15, each device watches for notification from the device it monitors and if no status information is transmitted even though it is due (Steps S600 and S602), the monitoring device asks the monitored device for status information (Step S604).

If no response is returned from the monitored device, the monitoring device assumes that a failure has occurred in the monitored device (Steps S606 and S608), the monitoring device notifies the device management server to that effect (Step S612) by attaching the "operation history" and "point of failure" of the monitored device (Step S610).

Alternatively, if no status information is transmitted even though it is due, the monitoring device may assume that a failure has occurred in the monitored device and notify the device management server to that effect without asking the monitored device for status information.

As shown in FIG. 16, any device that intends to shut down in a regular manner makes a shut-down request (power-off request) to the device management server (Step S700), reads its own device management table (Step S702), gives a shut-down notice to its monitoring partner (Step S704), and thereby completes a shut-down process.

The other device which receives this notice stops monitoring the device which has shut down and starts monitoring status information of another device according to its own device management table or a new device management table created based on properties newly acquired from the device management server.

Next, description will be given of a concrete embodiment of the device monitoring method according to the present invention.

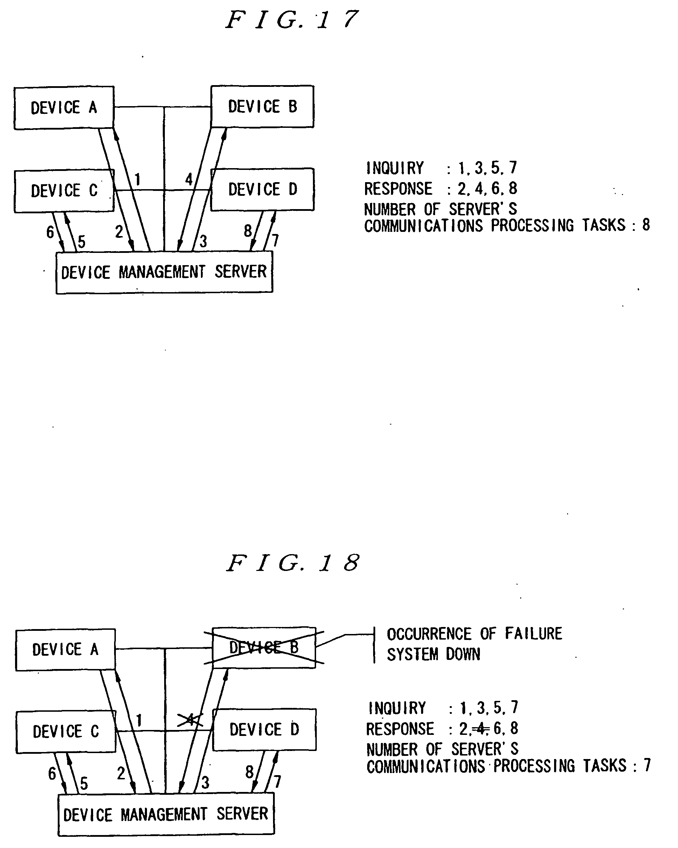

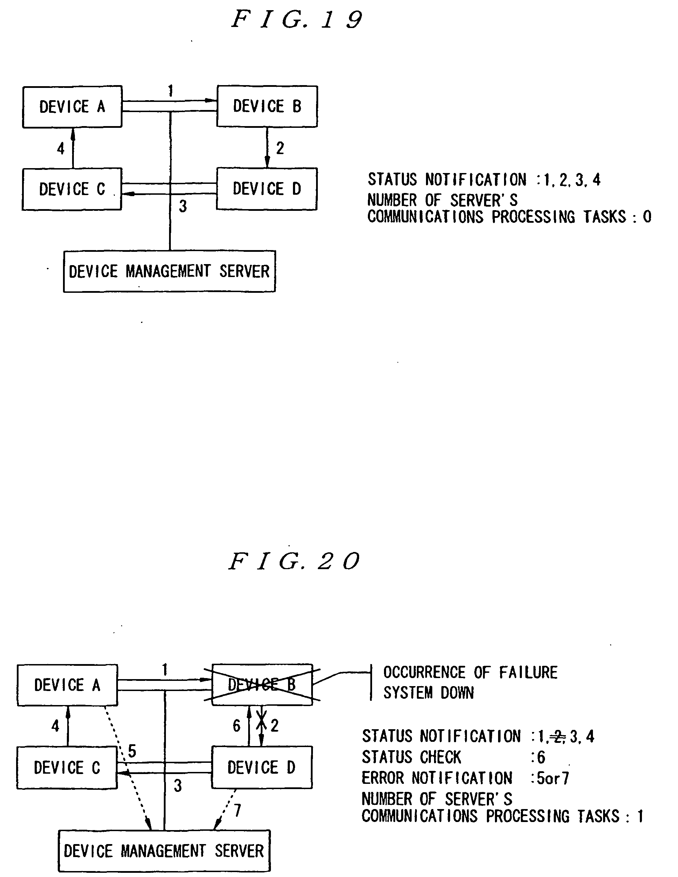

FIGS. 17 and 18 show a typical conventional device monitoring method while FIGS. 19 and 20 show the device monitoring method according to the present invention.

As show in FIG. 17, it is assumed that four devices A, B, C, and D are connected to a network N and managed by a single device management server.

In this type of network, to acquire status information about devices A, B, C, and D, i.e., to recognize whether or not they are operating properly, the device management server interrogates each of devices A, B, C, and D and checks for a response. In such a management method, the device management server must at least make four inquiries (1, 3, 5, and 7) and check for a response four times (2, 4, 6, and 8) for a total of eight communications processing tasks.

If each inquiry or response requires one packet and one communications processing task of the server, the inquiries and responses in this example require "eight" packets and "eight" communications processing tasks of the server as shown in Table 1 below.

**(Table 1)**

| Source | Destination | Packet type | Reference no. | No. of packets |
|---|---|---|---|---|
| Server | Device A | Inquiry | 1 | 1 |
| Device A | Server | Response | 2 | 1 |
| Server | Device B | Inquiry | 3 | 1 |
| Device B | Server | Response | 4 | 1 |
| Server | Device C | Inquiry | 5 | 1 |
| Device C | Server | Response | 6 | 1 |
| Server | Device D | Inquiry | 7 | 1 |
| Device D | Server | Response | 8 | 1 |
| Total | | | | 8 |
| Number of server's communications processing tasks | | | | 8 |

In such a typical conventional device monitoring method, if a failure occurs in one of the devices, for example, device B, causing its system to go down as shown in FIG. 18, the device management server interrogates all the devices A, B, C, and D equally and when it is found that there is no response from device B, the device management server recognizes that device B is down.

Thus, as shown in Table 2, if one of the devices goes down, both the number of packets and number of server's communications processing tasks are reduced by 1 to "7." Incidentally, if there is no response from device B, the device management server recognizes that a failure has occurred in device B.

In this way, the typical conventional device monitoring method, according to which a large number of packets flows not only under normal conditions, but also when the system is down, has the drawback of increased network traffic and increased amounts of information to be processed by the device management server.

**(Table 2)**

| Source | Destination | Packet type | Reference no. | No. of packets |
|---|---|---|---|---|
| Server | Device A | Inquiry | 1 | 1 |
| Device A | Server | Response | 2 | 1 |
| Server | Device B | Inquiry | 3 | 1 |
| Server | Device C | Inquiry | 5 | 1 |
| Device C | Server | Response | 6 | 1 |
| Server | Device D | Inquiry | 7 | 1 |
| Device D | Server | Response | 8 | 1 |
| Total | | | | 7 |
| Number of server's communications processing tasks | | | | 7 |

In contrast, according to the device monitoring method of the present invention, as shown in FIG. 19, devices A, B, C, and D monitor each other, each device transmits its status information periodically to an adjacent device, and any device whose status information ceases to be received notifies the device management server to that effect.

For example, as shown in FIG. 20, if a failure occurs in device B from among four devices A, B, C, and D, causing its system to go down, device A which cannot deliver its status information to device B notifies the device management server to that effect (5), or device D which does not receive status information from device B even after a predetermined period of time carries out a status check (6), thereby verifies that the system of device B is down, and then notifies the device management server to that effect (7).

Consequently, as shown in Table 3 below, the number of packets flowing through the network in normal times is halved to "4." Besides, as shown in Tables 4 and 5, even when a system is down, the device management server can recognize it through a single communications processing task.

Incidentally, the device management server may make an inquiry with the device for verification after receiving the notification, but the number of processing tasks is reduced greatly even if this inquiry is included.

**(Table 3)**

| Source | Destination | Packet type | Reference no. | No. of packets |
|---|---|---|---|---|
| Device A | Device B | Status notification | 1 | 1 |
| Device B | Device D | Status notification | 2 | 1 |
| Device D | Device C | Status notification | 3 | 1 |
| Device C | Device A | Status notification | 4 | 1 |
| Total | | | | 4 |
| Number of server's communications processing tasks | | | | 0 |

**(Table 4) (when device (a) which makes status notification makes error notification. During abnormal operation)**

| Source | Destination | Packet type | Reference no. | No. of packets |
|---|---|---|---|---|
| Device A | Device B | Status notification | 1 | 1 |
| Device D | Device C | Status notification | 3 | 1 |
| Device C | Device A | Status notification | 4 | 1 |
| Device A | Server Server | Error notification | 5 | 1 |
| Total | | | | 4 |
| Number of server's communications processing tasks | | | | 1 |

**(Table 5) (when device (d) which makes status notification makes error notification. During abnormal operation)**

| Source | Destination | Packet type | Reference no. | No. of packets |
|---|---|---|---|---|
| Device A | Device B | Status notification | 1 | 1 |
| Device D | Device C | Status notification notification | 3 | 1 |
| Device C | Device A | Status notification | 4 | 1 |
| Device D | Device B | Status notification | 5 | 1 |
| Device D | Server | Error notification | 6 | 1 |
| Total | | | | 5 |
| Number of server's communications processing tasks | | | | 1 |

In a network environment which contains N devices per device management server, in the conventional scheme according to which one inquiry and response are made per device, the total number of inquiry packets and response packets between server and device as well as the number of server's communications processing tasks are given by N x 2 as shown in Table 6 below. Both the number of packets and number of server's communications processing tasks increase dramatically with increases in N.

Also, as shown in Table 7, if one (device 2) of the devices is rendered inoperable, since the device makes no response, both the number of packets and number of server's communications processing tasks become 2N - 1, still requiring large numbers of packets and communications processing tasks.

**(Table 6)**

| Source | Destination | Packet type | No. of packets |
|---|---|---|---|
| Server | Device 1 | Inquiry | 1 |
| Device 1 | Server | Response | 1 |
| Server | Device 2 | Inquiry | 1 |
| Device 2 | Server | Response | 1 |
| ... | ... | ... | ... |
| ... | ... | ... | ... |
| Server | Device N | Inquiry | 1 |
| Device N | Server | Response | 1 |
| Total | | | 2N |
| Number of server's communications processing tasks | | | 2N |

**(Table 7)**

| Source | Destination | Packet type | No. of packets |
|---|---|---|---|
| Server | Device 1 | Inquiry | 1 |
| Device 1 | Server | Response | 1 |
| Server | Device 2 | Inquiry | 1 |
| Server | Device 3 | Inquiry | 1 |
| Device 3 | Server | Response | 1 |
| ... | ... | ... | ... |
| ... | ... | ... | ... |
| Server | Device N | Inquiry | 1 |
| Device N | Server | Response | 1 |
| Total | | | 2N-1 |
| Number of server's communications processing tasks | | | 2N-1 |

In contrast, according to the device monitoring method of the present invention, as shown in Table 8 below, the number of packets flowing through the network during normal operation of the devices is N, which is equal to the number of devices and is half that of the conventional scheme.

**(Table 8)**

| Source | Destination | Packet type | No. of packets |
|---|---|---|---|
| Device 1 | Device 2 | Status notification | 1 |
| Device 2 | Device 3 | Status notification | 1 |
| ... | ... | ... | ... |
| Device N | Device 1 | Status notification | 1 |
| Total | | | N |
| Number of server's communications processing tasks | | | 0 |

Also, as shown in Table 9 below, when one (device K) of the devices becomes inoperable and the immediately preceding device (device K-1) makes an error notification, the total number of packets is decreased by the status notification from device K and increased by the notification from device K-1, and thus remains unchanged (N). Consequently, the network traffic remains unchanged as well. Also, the number of server's processing tasks is increased only by one for the error notification from device K-1 and is far smaller than that of the conventional scheme.

**(Table 9)**

| Source | Destination | Packet type | No. of packets |
|---|---|---|---|
| Device 1 | Device 2 | Status notification | 1 |
| Device 2 | Device 3 | Status notification | 1 |
| ... | ... | ... | ... |
| ... | ... | ... | ... |
| Device N | Device 1 | Status notification | 1 |
| Device (K-1) | Server | Error notification | 1 |
| Total | | | N |
| Number of server's communications processing tasks | | | 1 |

In the case where the device (K+1) which receives status notification from the device (K) rendered inoperable makes an error notification to the server, there are only two additional packets, namely, a status check by device K+1 and the error notification to the server from device K+1, and thus the total number of packets is increased only by one, as shown in Table 10 below. Again, the number of server's processing tasks is increased only by one for the error notification from device K-1 and is far smaller than that of the conventional scheme.

**(Table 10)**

| Source | Destination | Packet type | No. of packets |
|---|---|---|---|
| Device 1 | Device 2 | Status notification | 1 |
| Device 2 | Device 3 | Status notification | 1 |
| ... | ... | ... | ... |
| ... | ... | ... | ... |
| Device N | Device 1 | Status notification | 1 |
| Device (K+1) | Device K | Status notification | 1 |
| Device (K+1) | Server | Error notification | 1 |
| Total | | | N+1 |
| Number of server's communications processing tasks | | | 1 |

In this way, the present invention eliminates the need for periodic interrogations of devices by the device management server and responses from the devices, and thus avoids increases in the load on the device management server and in network traffic even if the number of devices increases with increases in the scale of the network.

This eliminates the need for high-spec servers or broadband network backbones, making it possible to utilize existing PCs and communications infrastructures and thus offering increased cost efficiency.

Even if the device management server does not make inquiries, it can recognize any abnormality immediately because it is notified of the abnormality by the device which detected the abnormality. This makes it possible to take appropriate measures quickly such as repairing or replacing the device which caused the abnormality or went down, and thus contributes greatly to improve the reliability of the entire system.

Incidentally, in the present invention, the protocol used for existence check and status check between devices or between the device management server and devices is not limited to a particular one. However, the use of TCP/IP compliant communications protocols such as HTTP (HyperText Transfer Protocol), SNMP (Simple Network Management Protocol), and FTP (File Transfer Protocol) will increase versatility and allow the present invention to be used directly on Internet-related networks such as the one used in an embodiment described later. Also, by using XML (eXtensibleMarkupLanguage) as data format, it is possible to exchange data independent of the OS and applications running on the devices 10 and device management server 12 on the network.

Also, the "status information" about a device according to this embodiment is not specifically limited as long as it represents states of the device. For example, it includes ON/OFF state of power, time after the start-up of the device, standard time (GMT (Greenwich Mean Time), Japan Standard Time, etc.), power consumption, date of manufacture, serial number of the product, network settings, IP address, subnet mask, default gateway, DNS (Domain Name System) name, WINS (Windows Internet Name Service) name, NetBIOS (Network BIOS) name, firmware version information, memory size (used memory space, unused memory space, hard disk size, used hard disk space, and unused hard disk space), and trouble information. In the case of printers, the status information represents information peculiar to printers. It includes, toner consumption (%: CMYK), remaining amount of toner (%: CMYK), number of sheets printed after power-on (A4, A3, B5, etc.), paper tray, condition of the cover (open/closed), presence or absence of a duplex unit, serial number of the product, inside temperature of the printer, presence or absence of paper jam, and trouble information.

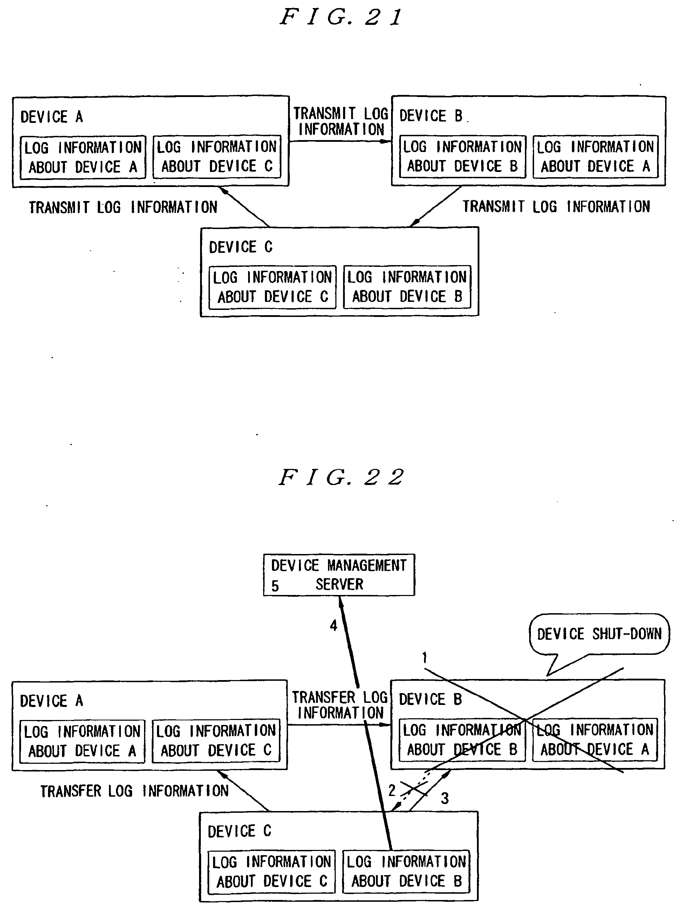

FIGS. 21 to 31 show other embodiments of the present invention.

According to an embodiment shown in FIGS. 21 and 22, devices exchange not only their own status information as in the case of the above embodiment, but also log information which represents device history of each device. This makes it possible not only to instantly identify a device which went down, but also to acquire its log information and take most appropriate measures.

Specifically, in the example of FIG. 21 where there are three devices A, B, and C on a network, if device A transmits its log information together with its status information to device B, if device B transmits its log information together with its status information to device C, and if device C transmits its log information together with its status information to device A, each device A, B, or C will possess two pieces of information: its own log information and log information about another device as shown in the figure.

Consequently, as shown in FIG. 22, if one of the devices, namely device B, shuts down (1), the status information and log cease to be transmitted from device B to device C (2). Device C which detects the situationmakes "operation inquiry" (3) with device B and if there is no response from device B, device C determines that device B is down and notifies the device management server by attaching the time at which device B stopped and device B's log information held by device C (4). This allows the device management server not only to learn quickly that device B went down, but also to extract (5) useful information from the device B's log information sent from device C and use it effectively.

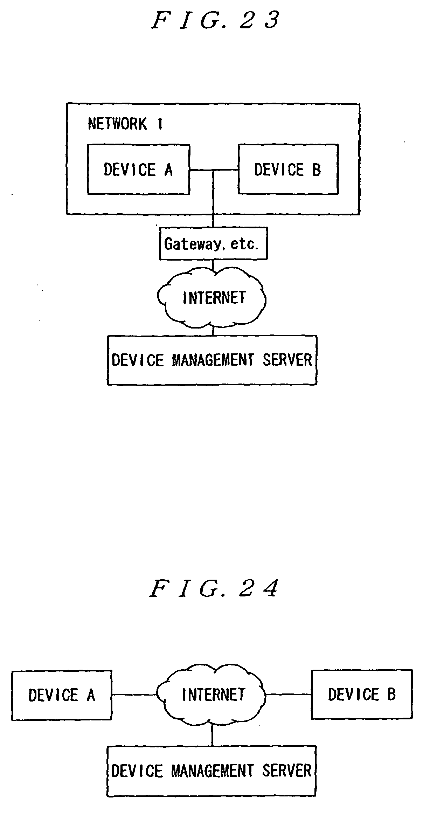

FIGS. 23 to 29 show various forms of networks to which the present invention can be applied.

The networks to which the present invention can be applied are not limited to LANs or similar networks constructed within single buildings. Devices may be connected to the device management server via a wide-area network such as the Internet as shown in FIG. 23 or all the devices and the device management server may be connected individually to the Internet as shown in FIG. 24.

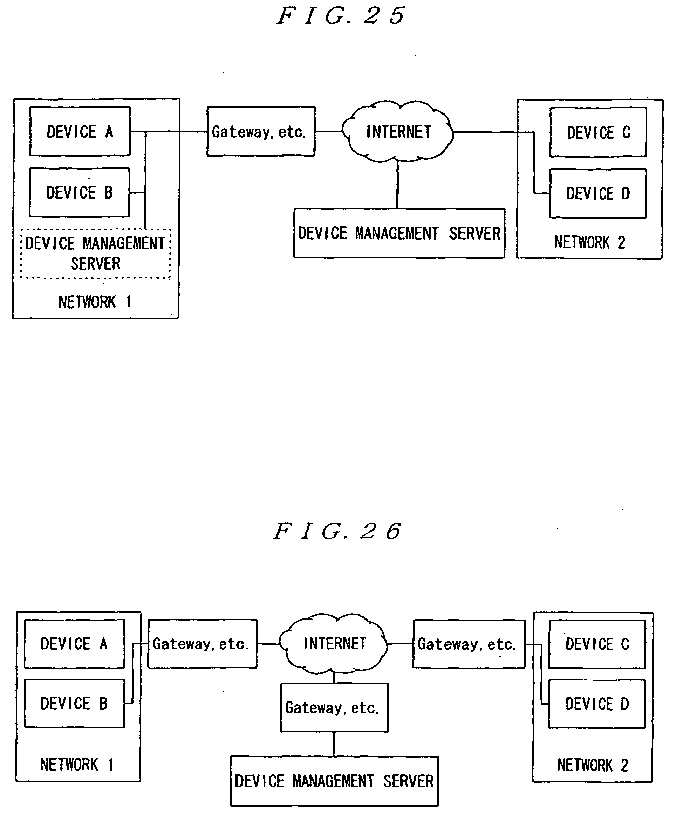

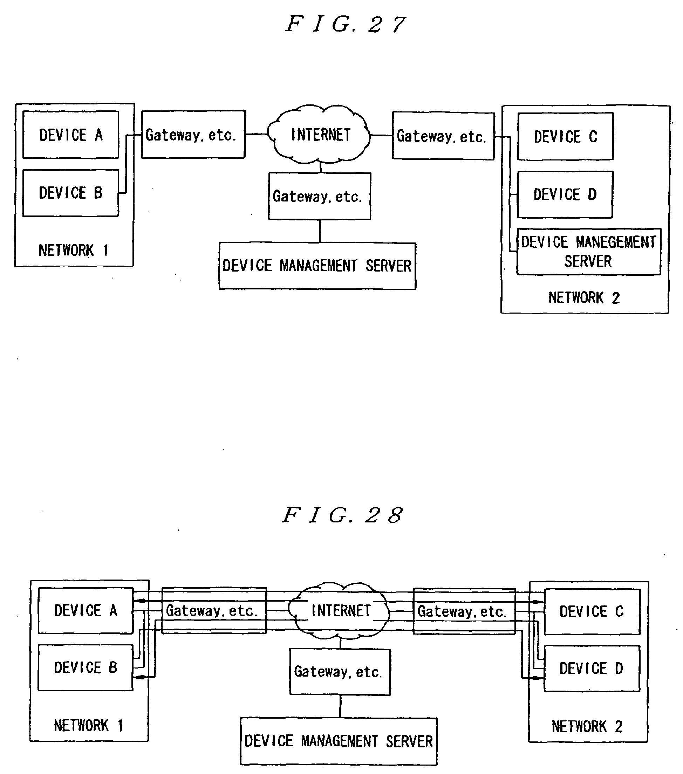

Also, devices may be connected to the device management server via a gateway and the Internet as shown in FIG. 25, all the devices maybe connected to the device management server via gateways and the Internet as shown in FIG. 26, or two or more device management servers may be installed as shown in FIG. 27.

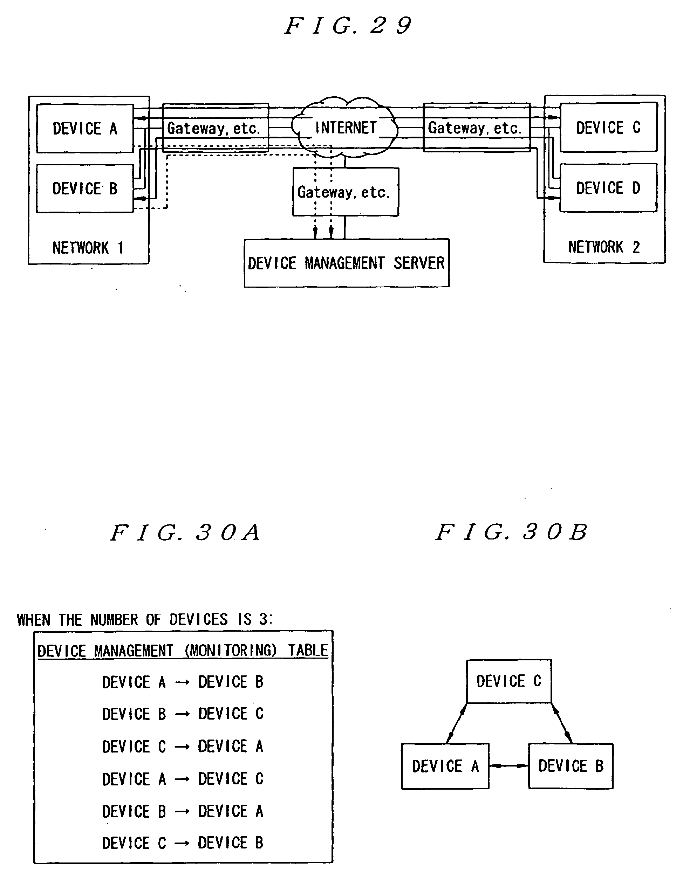

If devices on network 1 and network 2 which are located away from each other monitor each other as shown in FIGS. 28 and 29, for example, when one of the networks goes down, when all the devices on one of the networks go down, or when a gateway goes down, devices on the other network can detect the problem and notify the device management server.

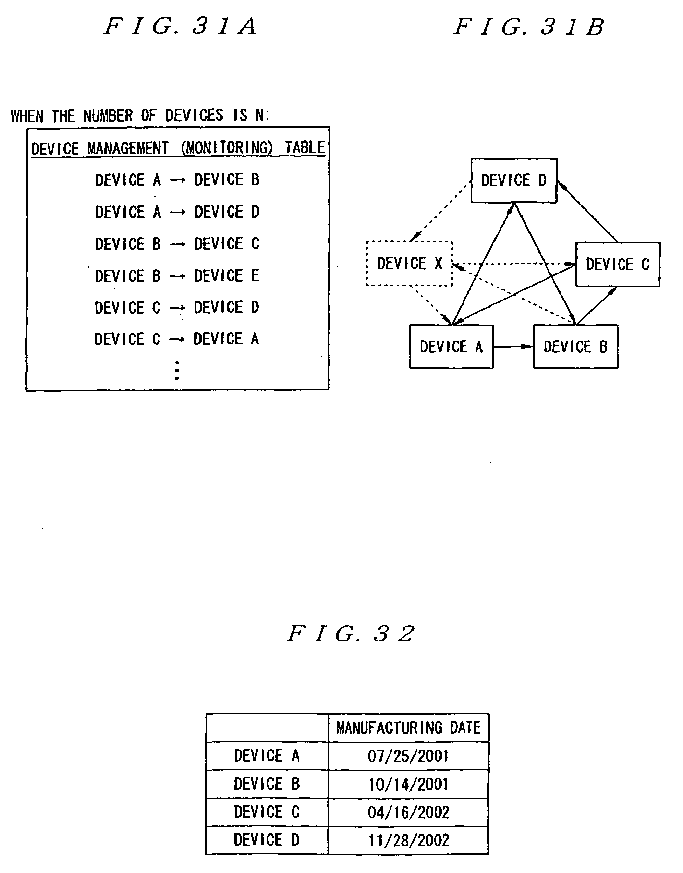

FIGS. 32 to 34 show examples of how devices are paired to monitor each other.

One of possible criteria for selecting monitoring partners is physical closeness such that devices installed, for example, in the same room or same building monitor each other. Another criterion is logical closeness. For example, if devices close in category (a printer and scanner, or a microwave oven and refrigerator) are selected as monitoring partners, it is possible to provide an environment in which devices of the same category are used successively because closely related devices (devices used in conjunction) monitor each other.

Besides, as shown in FIGS. 32 to 34, by pairing devices which differ by a certain period or more in the date of manufacture, i.e., by pairing old and new devices in terms of manufacturing date, as monitoring partners, it is possible to eliminate the chance that both devices will go down simultaneously, making it impossible to notify their states to the device management server.

Suppose, for example, there are four devices A, B, C, and D on a network and they get newer in this order as shown in FIG. 32.

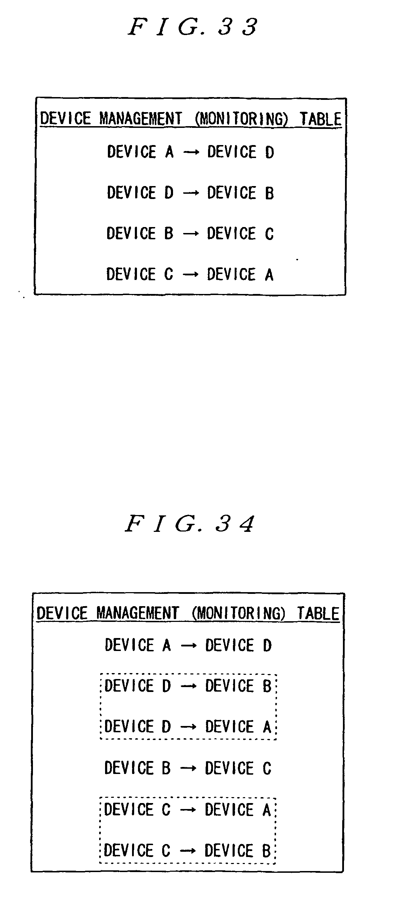

In this example, if deviceAwith the oldest manufacturing date monitors device D with the newest manufacturing date, device D with the newest manufacturing date monitors device B with the next oldest manufacturing date, and so on as shown in a device monitoring table in FIG. 33, it can be said there is not much difference in the possibility of failure among different pairs in view of the general assumption that older devices are more prone to failure. Thus, it is possible to make error notification effectively.

Furthermore, in a combination of devices which differ greatly among themselves in the date of manufacture, as shown in FIG. 34, when transmitting information to a device with an old manufacturing date, the reliability of information transmission can be improved if the information is also transmitted to another device redundantly.

Besides, in the case of devices supposed to operate continuously, by pairing devices of the same type or devices of different types, it is possible to ensure reliability of error handling.

On the other hand, monitoring will not have sufficient effect if devices which do not operate continuously are paired. Thus, to improve the reliability of a monitoring system, it is necessary to pair a device which operate continuously and a device which do not operate continuously or to pair different devices.

Besides, monitoring partners are not limited to one-to-one relationship. If all the devices monitor two or more devices as shown in FIGS. 30A, 30B, 31A and 31B, it is possible to improve the reliability of monitoring greatly although there is some increase in the number of packets flowing through the network.

Incidentally, in the example of FIGS. 30A and 30B, all three devices A, B, and C monitor the other devices while in the example of FIGS. 31A and 31B, all N devices monitor two devices.

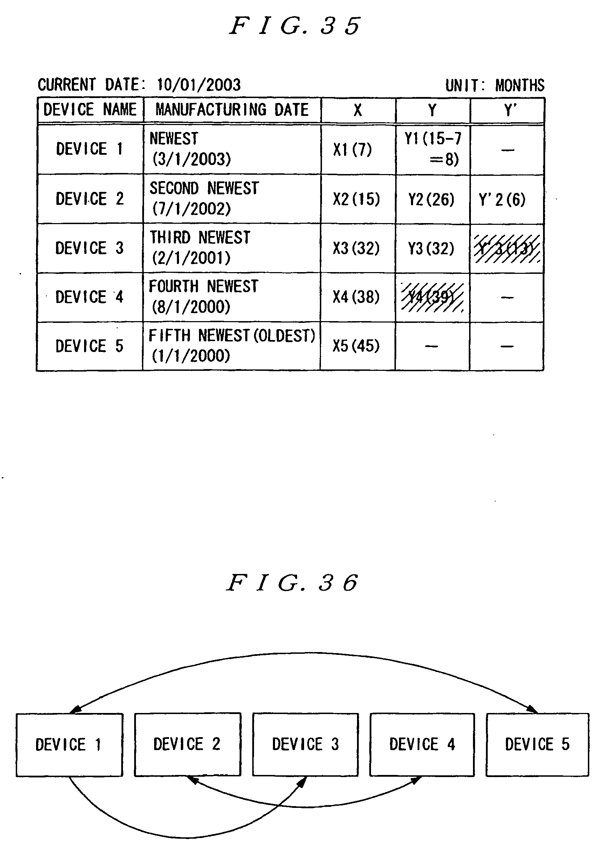

FIGS. 35 to 41 offer more detailed illustrations of some methods for pairing two devices which differ by a certainperiod or more in the time of manufacture as shown in FIGS. 32 to 34 in order for them to monitor each other.

FIGS. 35 and 36 show the first example of how devices are paired.

Suppose there are five devices 1 to 5 whose manufacturing dates are known on a network where monitoring is conducted as shown in the figures, operation periods X1 to X5 which represent the newness of devices 1 to 5 can be calculated by subtracting the manufacturing dates from the current date (e.g., October 1, 2003). For example, the operation period X1 of device 1, whosemanufacturingdate is March 1, 2003, is 7 months, the operation period X2 of device 1, whose manufacturing date is July 1, 2002, is 15 months, the operation period X5 of device 5, whose manufacturing date is January 1, 2000, is 45 months, and so forth. The operation periods X1 to X5 of devices 1 to 5 get longer in this order.

Then, if differences of operation periods are calculated based on operation period X1, difference Y1 between X1 and X2 is (15 - 7) = 8 months, difference Y2 between X1 and X3 is 26 months, difference Y3 between X1 and X4 is 32 months, and difference Y4 between X1 and X5 is 39 months.

Then, devices are paired by selecting the largest value from Y1 to Y4 thus calculated. In the example of FIG. 35, since the value of Y4 is the largest, device 1 and device 5 are paired as monitoring partners.

Similarly, the differences of operation periods among the remaining devices 2 to 4 are calculated as follows: Y'2 = Y3- Y2 = 6, Y'3 = Y4 - Y2 = 13. Since Y'3 is larger than Y'2, device 2 and device 4 are paired as monitoring partners.

Thus, in the example of FIG. 35, device 1 and device 5 as well as device 2 and device 4 are paired, and the remaining device 3 is monitored by the newest device 1 as shown in FIG. 36.

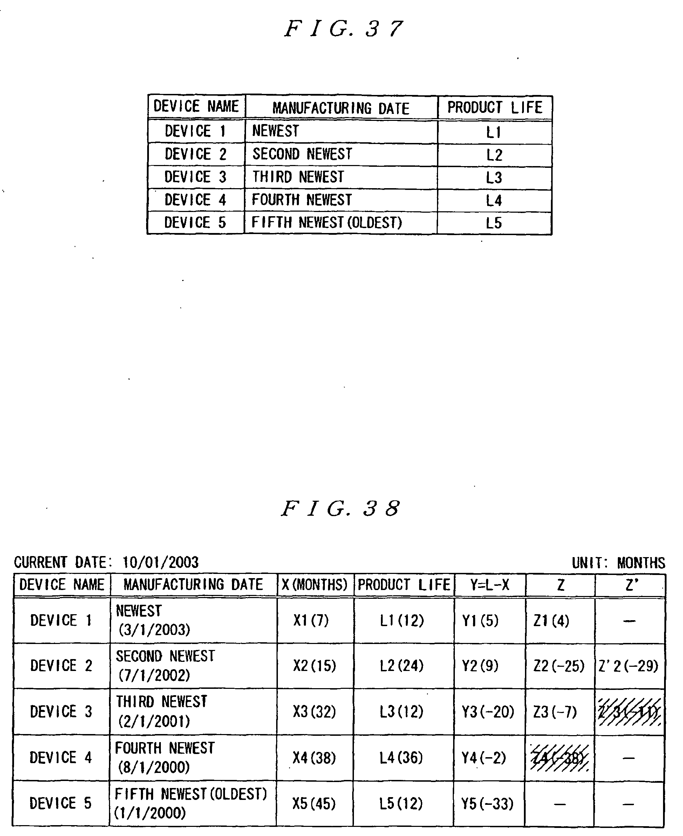

Another pairing method takes into consideration the product lives (L1 ~ L5) of devices 1 to 5 as shown in FIGS. 37 and 38.

Specifically, according to this method, value Y is calculated first by subtracting the operation period X up to the present from the product life L of each device. For example, as shown in FIG. 38, since device 1 has a product live of twelve months, Y1 of device 1 is "5 months," which is obtained by subtracting "7 months" from "12 months." Similarly, Y2 of device 2 is "9 months, "Y3 of device 3 is "-20 months" (there may be a negative value, as in this case), Y4 of device 4 is "-2 months," and Y5 of device 5 is "-33 months."

Next, based on Y1 from among Y1 to Y5 thus determined, differences Z1 to Z4 of Y2 to Y5 from Y1 are calculated. In the example of FIG. 38, Z1 given by Z1 = Y2 - Y1 is calculated as "4 months" by subtracting "5 months" from "9 months," Z2 is calculated as "-25 months" by subtracting Y3 from Y1, Z3 is "-7 months," and Z4 is "-38 months."

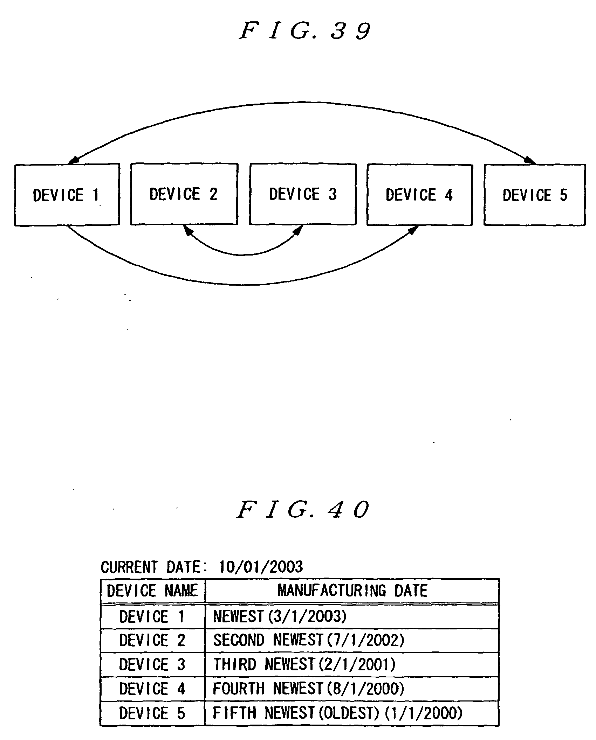

Then, by comparing Z1 with Z2 to Z4 thus calculated, the smallest Z value is determined and devices whose product lives will not expire around the same time from a stochastic point of view are paired. In the example of FIG. 38, since Z4 has the smallest value, the devices which are paired first are devices 1 and 5 as shown in FIG. 39.

Excluding the devices 1 and 5 which have been paired, Z'2 and Z'3 are calculated for the remaining devices 2 to 3 in a similar manner. When all pairs have been determined, any remaining device is set to be monitored by the device which has the newest manufacturing date. In the example of FIG. 38, since Z' 2 is smaller than Z' 3, device 2 and device 3 are paired, and the remaining device 1 is set to be monitored by device 1 which has the newest manufacturing date as shown in FIG. 39.

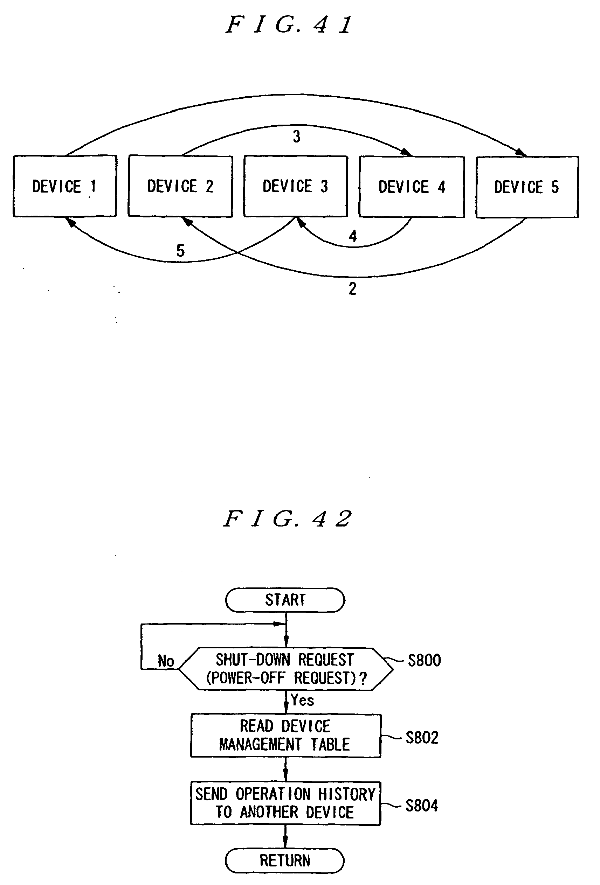

According to still another pairing method, devices 1 to 5 monitor one of them according to their manufacturing dates as shown in FIGS. 40 and 41.

Specifically, suppose there are five devices 1 to 5 which get older in this order as shown in FIG. 40. As shown in FIG. 40, (1) device 1 with the newest manufacturing date monitors device 5 with the oldest manufacturing date, (2) the device 5 monitors device 2 with the second newest date, (3) the device 2 monitors device 4 with the fourth newest date, (4) the device 4 monitors device 3 with the third newest date, and (5) the device 3 monitors device 1 with the newest manufacturing date.

In this way, by determining the monitoring partner of each device based on the time of manufacture, it is possible to effectively avoid a situation in which monitoring and monitored devices would reach the end of their lives and lose their monitoring and notification functions, and thus to build a highly reliable system. Incidentally, it is desirable that the devices paired in this way differ from each other by a certain period or more in the time of manufacture. The specific period depends on the life (durable years) of individual devices, reliability of the system, etc. and is not limited to a particular value. However, in the case of printers or other devices whose average life is several years, for example, it is desirable that they differ from each other by at least several months or more in the time of manufacture.

FIG. 42 shows an exemplary shut-down process of a device. It shows a flow in which acquired operation history or other log information such as the one described in the previous embodiment is transferred to another device.

Specifically, any device which is shutting down checks for a device shut-down request (Step S800). If there is a shut-down request (Yes), the device reads its device management table (Step S802) and sends its own operation history and the operation history of another device it has acquired to the new monitoring device specified in the device management table (Step S804). This makes it possible to go through a shut-down process without loosing useful operation history.

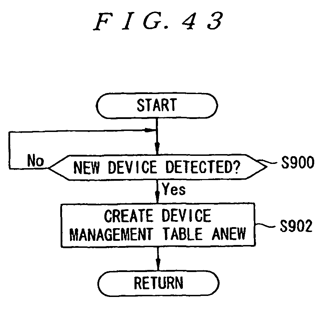

Also, if a new device is added to an existing network, as shown in FIG. 43 the parent device detects the new device (Step S900), creates a device management table anew (Step S902), and thereby immediately selects a monitoring partner for the new device.

## Claims

1. A printer monitoring system comprising a plurality of printers (10) connected to a network and a printer management server (12) which manages the plurality of printers (10), wherein:
each of the plurality of printers (10) is provided with a printer monitoring function (20) for monitoring another printer distinct from the monitoring printer and notifying the printer management server (12) or a third printer distinct from said another printer of changes in the state of the monitored printer, and
wherein the printer monitoring function (20) comprises:
printer detecting section (21) for recognizing existence of other printers connected to the network;
printer management table creation section (22) for creating a printer management table for use to identify a printer to be monitored out of the recognized other printers;
printer management table storage section (23) for storing the created printer management table;
status information detecting section (24) for detecting status information about the monitoring printer;
status information transmission section (25) for transmitting status information about the monitoring printer and the monitored printer to a third printer or the printer management server (12); and
status information receiving section (26) for receiving status information at least from any other printer.

2. A printer monitoring program used for the printer monitoring system according to claim 1, wherein the printer monitoring program makes a computer implement of the printer monitoring function (20) of the printer monitoring system according to claim 1.

3. A printer monitoring method for a plurality of printers (10) in a network, wherein the plurality of printers (10) monitor each other for their state periodically or on an as-needed basis and any printer which finds any change in the state being monitored notifies other printers or a printer management server (12) about the change.

4. The printer monitoring method according to claim 3, wherein:
the notification includes log information about the monitored printer.

5. The printer monitoring method according to claims 3 or 4, wherein:
each of the printers monitors a logically or physically close printer.

6. The printer monitoring method according to any of claims 3 to 5, wherein:
each of the printers monitors printers which differ by a certain period or more in the time of manufacture.

7. The printer monitoring method according to any of claims 3 to 6, wherein:
each of the printers determines a printer to be monitored according to a printer management table (100) created by a parent printer.

8. The printer monitoring method according to claim 7, wherein:
the printer management table (100) is created by the parent printer according to printer management method properties acquired from the printer management server (12).

9. The printer monitoring method according to claim 7 or 8, wherein:
the printer which starts up first from among the plurality of printers (10) in the network becomes the parent printer.

10. The printer monitoring method according to any of claims 7 to 9, wherein:
when the parent printer stops operating, a printer which detects the shut down functions as a parent printer instead.

11. The printer monitoring method according to any of claims 7 to 10, wherein:
when the parent printer shuts down, the first printer that receives a shut-down notice from the parent printer functions as a parent printer instead.

12. The printer monitoring method according to any of claims 7 to 11, wherein:
an XML protocol is used as a data description format for communications section among the printers and communications section between the printers and the printer management server.

## Revendications

1. Système de contrôle d'imprimante, comprenant une pluralité d'imprimantes (10) connectées à un réseau et un serveur de gestion d'imprimantes (12) qui gère la pluralité d'imprimantes (10), dans lequel :
chacune de la pluralité d'imprimantes (10) est équipée d'une fonction de contrôle d'imprimante (20) pour contrôler une autre imprimante distincte de l'imprimante de contrôle et notifier au serveur de gestion d'imprimante (12) ou à une troisième imprimante distincte de ladite autre imprimante les changements d'état de l'imprimante contrôlée et
dans lequel la fonction de contrôle d'imprimante (20) comprend :
une section de détection d'imprimante (21) pour reconnaître l'existence d'autres imprimantes connectées au réseau ;
une section de création de tableau de gestion d'imprimante (22) pour créer un tableau de gestion d'imprimante à utiliser pour identifier une imprimante à contrôler à partir des autres imprimantes reconnues ;
une section de stockage de tableau de gestion d'imprimante (23) pour stocker le tableau de gestion d'imprimante créé ;
une section de détection d'informations d'état (24) pour détecter des informations d'état sur l'imprimante de contrôle ;
une section de transmission d'informations d'état (25) pour transmettre des informations d'état sur l'imprimante de contrôle et l'imprimante contrôlée à une troisième imprimante ou au serveur de gestion d'imprimantes (12) ; et
une section de réception d'informations d'état (26) pour recevoir des informations d'état au moins de toute autre imprimante.

2. Programme de contrôle d'imprimante utilisé pour le système de contrôle d'imprimante selon la revendication 1, dans lequel le programme de contrôle d'imprimante procède à une mise en oeuvre informatique de la fonction de contrôle d'imprimante (20) du système de contrôle d'imprimante selon la revendication 1.

3. Procédé de contrôle d'imprimante pour une pluralité d'imprimantes (10) dans un réseau, dans lequel la pluralité d'imprimantes (10) se contrôlent entre elles au niveau de leur état périodiquement ou en fonction des besoins et toute imprimante décelant tout changement dans l'état en cours de contrôle notifie le changement aux autres imprimantes ou à un serveur de gestion d'imprimantes (12).

4. Procédé de contrôle d'imprimante selon la revendication 3, dans lequel :
la notification inclut des informations de mise à jour sur l'imprimante contrôlée.

5. Procédé de contrôle d'imprimante selon la revendication 3 ou 4, dans lequel .
chacune des imprimantes contrôle une imprimante logiquement ou physiquement proche.

6. Procédé de contrôle d'imprimante selon l'une quelconque des revendications 3 à 5, dans lequel :
chacune des imprimantes contrôle des imprimantes qui diffèrent d'une certaine période ou plus en temps de fabrication.

7. Procédé de contrôle d'imprimante selon l'un quelconque des revendications 3 à 6, dans lequel :
chacune des imprimantes détermine une imprimante à contrôler suivant un tableau de contrôle d'imprimante (100) créé par une imprimante apparentée.

8. Procédé de contrôle d'imprimante selon la revendication 7, dans lequel :
le tableau de contrôle d'imprimante (100) est créé par l'imprimante apparentée suivant les propriétés du procédé de gestion d'imprimante relevées dans le serveur de gestion d'imprimantes (12).

9. Procédé de contrôle d'imprimante selon la revendication 7 ou 8, dans lequel :
l'imprimante qui démarre en premier parmi la pluralité d'imprimantes (10) du réseau devient l'imprimante apparentée.

10. Procédé de contrôle d'imprimante selon l'une quelconque des revendications 7 à 9, dans lequel :
lorsque l'imprimante apparentée arrête de fonctionner, une imprimante détectant l'arrêt fonctionne comme imprimante apparentée à sa place.

11. Procédé de contrôle d'imprimante selon l'une quelconque des revendications 7 à 10, dans lequel :
lorsque l'imprimante apparentée s'arrête, la première imprimante recevant un avis d'arrêt de l'imprimante apparentée fonctionne comme imprimante apparentée à sa place.

12. Procédé de contrôle d'imprimante selon l'une quelconque des revendications 7 à 11, dans lequel :
un protocole XML est utilisé comme format de description de données pour la section de communication parmi les imprimantes et la section de communication entre les imprimantes et le serveur de gestion d'imprimantes.

## Patentansprüche

1. Druckerüberwachungssystem, umfassend eine Vielzahl von Druckern (10), die an ein Netzwerk angeschlossen sind, und einen Druckerverwaltungsserver (12), der die Vielzahl von Druckern (10) verwaltet, wobei:
jeder von der Vielzahl von Druckern (10) mit einer Druckerüberwachungsfunktion (20) versehen ist, um einen anderen Drucker zu überwachen, der vom überwachenden Drucker verschieden ist, und den Druckerverwaltungsserver (12) oder einen dritten Drucker, der von diesem anderen Drucker verschieden ist, über Änderungen im Status des überwachten Druckers zu informieren, und
wobei die Druckerüberwachungsfunktion (20) umfaßt:
einen Druckererkennungsabschnitt (21), um das Vorhandensein von anderen Druckern, die am Netzwerk angeschlossen sind, zu erkennen;
einen Druckerverwaltungstabellenerzeugungsabschnitt (22), um eine Druckerverwaltungstabelle zu erzeugen, die verwendet wird, um einen zu überwachenden Drucker von den erkannten anderen Druckern zu unterscheiden;
einen Druckerverwaltungstabellenspeicherabschnitt (23), um die erzeugte Druckerverwaltungstabelle zu speichern;
einen Statusinformationserkennungsabschnitt (24), um Statusinformation über den überwachenden Drucker zu erkennen;
einen Statusinformationsübertragungsabschnitt (25), um Statusinformation über den überwachenden Drucker und den überwachten Drucker an einen dritten Drucker oder an den Druckerverwaltungsserver (12) zu übertragen; und
einen Statusinformationsempfangsabschnitt (26) um Statusinformation mindestens von einem anderen Drucker zu empfangen.

2. Druckerüberwachungsprogramm, das für das Druckerüberwachungssystem nach Anspruch 1 verwendet wird, wobei das Druckerüberwachungsprogramm einen Computer veranlaßt, die Druckerüberwachungsfunktion (20) des Drukkerüberwachungssystems nach Anspruch 1 auszuführen.

3. Druckerüberwachungsverfahren für eine Vielzahl von Druckern (10) in einem Netzwerk, wobei die Vielzahl von Druckern (10) sich periodisch oder bei Bedarf gegenseitig auf ihren Status hin überwacht und jeder Drucker, der eine Änderung im überwachten Status findet, andere Drucker oder einen Druckerverwaltungsserver (12) über die Änderung informiert.

4. Druckerüberwachungsverfahren nach Anspruch 3, wobei:
die Information Log-Information über den überwachten Drucker einschließt.

5. Druckerüberwachungsverfahren nach Anspruch 3 oder 4, wobei:
jeder der Drucker einen logisch oder physikalisch nahen Drucker überwacht.

6. Druckerüberwachungsverfahren nach einem der Ansprüche 3 bis 5, wobei:
jeder der Drucker Drucker überwacht, die sich um eine bestimmte Periode oder mehr in der Herstellungszeit unterscheiden.

7. Druckerüberwachungsverfahren nach einem der Ansprüche 3 bis 6, wobei:
jeder der Drucker einen Drucker bestimmt, der einer Druckerverwaltungstabelle (100) entsprechend zu überwachen ist, die von einem Stammdrucker erzeugt wird.

8. Druckerüberwachungsverfahren nach Anspruch 7, wobei:
die Druckerverwaltungstabelle (100) den vom Druckerverwaltungsserver (12) erfaßten Eigenschaften des Druckerverwaltungsverfahrens entsprechend vom Stammdrucker erzeugt wird.

9. Druckerüberwachungsverfahren nach Anspruch 7 oder 8, wobei:
der Drucker, der von der Vielzahl der Drucker (10) im Netzwerk zuerst eingeschaltet wird, zum Stammdrucker wird.

10. Druckerüberwachungsverfahren nach einem der Ansprüche 7 bis 9, wobei:
wenn der Stammdrucker abgeschaltet wird, ein Drucker, der die Abschaltung erkennt, stattdessen als Stammdrucker fungiert.

11. Druckerüberwachungsverfahren nach einem der Ansprüche 7 bis 10, wobei:
wenn der Stammdrucker abgeschaltet wird, der erste Drucker, der die Abschaltmeldung vom Stammdrucker empfängt, stattdessen als Stammdrucker fungiert.

12. Druckerüberwachungsverfahren nach einem der Ansprüche 7 bis 11, wobei:
ein XML-Protokoll als Datenbeschreibungsformat für den Kommunikationsabschnitt unter den Druckern und den Kommunikationsabschnitt zwischen den Druckern und dem Druckerverwaltungsserver verwendet wird.
